(19) Europäisches Patentamt
European Patent Office
Office européen des brevets

(11) Veröffentlichungsnummer: **0 142 646**
**B1**

(12) # EUROPÄISCHE PATENTSCHRIFT

(45) Veröffentlichungstag der Patentschrift: **06.04.88**

(51) Int. Cl.⁴: **C 08 L 69/00**, C 08 L 85/02, C 08 L 67/02

(21) Anmeldenummer: **84110241.1**

(22) Anmeldetag: **29.08.84**

(54) **Mischungen aus vollaromatischen Polycarbonaten und/oder Polyestern und/oder Polyestercarbonaten, aromatischen Polyphosphonaten und Polyepoxiden, Verfahren zu ihrer Herstellung und ihre Verwendung für die Herstellung von Formkörpern, Folien und Fasern.**

(30) Priorität: **08.09.83 DE 3332396**

(43) Veröffentlichungstag der Anmeldung: **29.05.85 Patentblatt 85/22**

(45) Bekanntmachung des Hinweises auf die Patenterteilung: **06.04.88 Patentblatt 88/14**

(84) Benannte Vertragsstaaten: **DE FR GB IT NL**

(56) Entgegenhaltungen:
**EP-A-0 008 046**
**EP-A-0 028 345**
**EP-A-0 034 697**
**DE-A-3 150 957**
**DE-B-1 954 588**

**CHEMICAL ABSTRACTS, Band 84, Nr. 2, 12. Januar 1976, Seite 41, Zusammenfassungsnr. 5933a, Columbus, Ohio, US; & JP - A - 50 96648 (TORAY INDUSTRIES, INC.) 31.07.1975**

(73) Patentinhaber: **BAYER AG, Konzernverwaltung RP Patentabteilung, D-5090 Leverkusen 1 Bayerwerk (DE)**

(72) Erfinder: **Schmidt, Manfred, Dr., Bodelschwinghstrasse 20, D-4150 Krefeld 1 (DE)**
Erfinder: **Reinking, Klaus, Dr., Robert- Stolz-Strasse 16, D-5632 Wermelskirchen (DE)**
Erfinder: **Rudolph, Udo, Dr., Scheiblerstrasse 101, D-4150 Krefeld (DE)**

**EP 0 142 646 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1988

**Beschreibung**

Die Erfindung betrifft flammwidrige Mischungen auf Basis halogenfreier voll-aromatischer Polyester und/oder Polycarbonate und/oder Polyestercarbonate und halogenfreier aromatischer Polyphosphonate, die zur Stabilisierung bestimmte 2.3-Epoxypropylverbindungen enthalten, ein Verfahren zur Rerstellung dieser flammwidrigen Mischungen und ihre Verwendung zur Herstellung von Formkörpern, Folien und Fasern.

Aus z. B. der EP-8 046 ist es bekannt, Polyepoxide zu Polybutylenterephthalat zuzusetzen, um während der Verarbeitung durch thermischen Abbau entstehende Carboxylendgruppen über Polyepoxidgruppen zu verbinden. Es ist aber hieraus nichts über 17 den Reaktionsmechanismus und über dessen Übertragbarkeit auf an sich thermisch stabile Polymere bekannt.

Hochmolekulare aromatische Polyphosphonate haben sich als äußerst flammwidrig erwiesen (DE-DS 2 944 093). Sie besitzen den Vorteil, daß bei hohen Temperaturen, wie sie z. B. im Brandfall auftreten, weder korrosive Gase abgespalten werden noch ein Nachbrennen beobachtet wird. Die elektrischen und mechanischen Eigenschaften von aus diesen Polyphosphonaten hergestellten Formkörpern und Folien werden hohen Anforderungen jedoch nicht gerecht. Wenn man versucht, diesen Nachteil durch Zumischen vollaromatischer Polyester, Polycarbonate oder Polyestercarbonate zu mildern oder zu überwinden, hat man auf sorgfältige Vortrocknung der eingesetzten Polykondensate zu achten, da andernfalls beim Zusammenschmelzen der Komponenten- was am bequemsten durch Coextrusion geschieht - unerwünschte Abbaureaktionen stattfinden, die zu einer Erniedrigung der Viskosität führen, was wiederum mit verminderter Zähigkeit, reduzierter Festigkeit und erhöhter Anfälligkeit für Spannungsrißkorrosion verbunden ist.

Überraschenderweise wurden nun gefunden, daß sich diese Nachteile durch den Zusatz ausgewählter Polyepoxidverbindungen unterdrücken oder doch wenigstens deutlich verringern lassen. Auf die Vortrocknung, die in der Regel 12 bis 16 Stunden in Anspruch nahm, kann nunmehr verzichtet werden.

Gegenstand der Erfindung sind Mischungen aus:

I. 5 bis 95, vorzugsweise 10 bis 90 Gew.-% halogenfreiem aromatischem Polycarbonat und/oder halogenfreiem voll-aromatischem Polyester und/oder halogenfreiem voll-aromatischem Polyestercarbonat,

II. 5 bis 95, vorzugsweise 10 bis 90 Gew.-% halogenfreiem aromatischem Polyphosphonat und

III. 0,1 bis 1,0, vorzugsweise 0,15 bis 0,75 Gew.-% Polyepoxid aus der Reihe Triglycidylurazol, Triglycidylisocyanurat und 1.1.2.2-Tetra-(p-glycidyl-oxyphenyl)-ethan,

wobei sich die Gewichtsprozente jeweils auf die Summe der Komponenten I und II beziehen.

Weiterer Gegenstand der Erfindung ist ein Verfahren zur Herstellung dieser Mischungen, wonach man die Komponenten I, II und III in einem Kneter oder Extruder homogenisiert.

Weiterer Gegenstand der Erfindung ist die Verwendung dieser Mischungen zur Herstellung von Formkörpern, Fasern und Folien.

Halogenfreie aromatische Polycarbonate I im Sinne der Erfindung sind Homo- und Copolycarbonate auf Basis von Diphenolen, Phosgen, Kettenabbrechern und gegebenenfalls Verzweigungsmitttel. Bevorzugte Polycarbonate I besitzen ein als Gewichtsmittel $\bar{M}_w$ bestimmtes Molekulargewicht von 10 000 bis 200 000, insbesondere von 20 000 bis 80 000, ermittelt durch Lichtstreuung.

Bevorzugte Diphenole für die Herstellung der Polycarbonate I entsprechen der Formel

HO-Z-DH (1)

worin Z einen zweiwertigen ein- oder mehrkernigen aromatischen Rest mit 6 - 30 C-Atomen bedeutet, wobei Z derart gebaut ist, daß die beiden DH-Gruppen direkt an je ein C-Atom eines aromatischen Systems gebunden sind.

Besonders bevorzugte Diphenole sind Hydrochinon, Resorcin sowei Verbindungen der Formel (2)

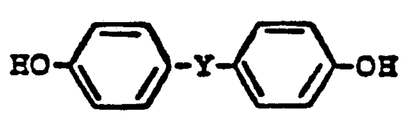

(2)

in der

Y eine Einfachbindung, einen Alkylen- oder Alkylidenrest mit 1 - 7 C-Atomen, einen Cycloalkylen- oder Cycloalkylidenrest mit 5 - 12 C-Atomen, -O-, -S-, $-\underset{\underset{O}{\|}}{S}-$, $-SO_2-$ oder $-\underset{\underset{O}{\|}}{C}-$ bedeutet,

sowie deren kernalkylierte Derivate, z. B.

Dihydroxydiphenyle, Bis-(hydroxyphenyl)-alkane, Bis-(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfoxide, Bis-(hydroxyphenyl)-sulfone und α, α Bis-(hydroxyphenyl)-diisopropylbenzole sowie deren kernalkylierte Verbindungen.

Die wichtigsten Diphenole seien nachfolgend aufgezählt:

Bisphenol A, 2.2-Bis-(3-methyl-4-hydroxyphenyl)-propan, 2.2-Bis-(3.5-dimethyl-4-hydroxyphenyl)-propan, 1.1-Bis-(4-hydroxyphenyl)-isobutan, 2.4-Bis-(4-hydroxyphenyl)-2-methylbutan, 1,1-Bis-(4-hydroxyphenyl)-cyclohexan, 4,4'-Dihydroxydiphenylsulfid, 4,4'-Dihydroxydiphenyl, 4,4'-Dihydroxydiphenylsulfon und α, α' -Bis-(4-hydroxyphenyl)-p-diisopropylbenzol.

Bevorzugte Polycarbonate I sind Copolycarbonate auf Basis von Bisphenol A und einem der oben als bevorzugt genannten Diphenole; besonders bevorzugt sind Polycarbonate, die als Diphenolreste nur Bisphenol-A-reste enthalten.

Voll-aromatische Polyester I im Sinne der Erfindung sind Polyester enthaltend Iso- und/oder Terephthalsäurereste, Diphenolreste, Reste von Kettenabbrechern und gegebenenfalls von Verzweigungsmitteln. Sie werden z. B. in der Monographie "Polyesters" von V.V. Korshak und S.V. Vinogradova, Pergamon Press, Oxford 1965, S. 494, 485-486, 454-455 beschrieben.

Bevorzugte voll-aromatische Polyester I besitzen relative Viskositäten von 1,18 bis 2,0, vorzugsweise von 1,2 bis 1,5 (gemessen an einer Lösung von 0,5 g Polyester in 100 ml Dichlormethan-Lösung bei 25° C).

Besonders bevorzugte voll-aromatische Polyester I enthalten Iso- und Terephthtalsäurereste im Verhältnis 7 : 3 bis 3 : 7.

Bevorzugte Diphenole für die Herstellung der voll-aromatischen Polyester I sind die oben für die Herstellung der Polycarbonate I als bevorzugt beschriebenen Diphenole. Besonders bevorzugt ist bisphenol A.

Voll-aromatische Polyestercarbonate I im Sinne der Erfindung enthalten Iso- und/oder Terephthalsäurereste, Carbonatgruppen, Diphenolreste der allgemeinen Formel (1) bzw. (2), Reste von Kettenabbrechern und gegebenenfalls Verzweigungsmitteln. Diese Polyestercarbonate I und ihre Herstellung werden beispielsweise in der Zeitschrift "Polymer" 1982, Vol 23, S. 609 - 612 durch C.P. Bosnyak et al. innerhalb des Artikels mit dem Titel "Synthesis and properties of some poly(bisphenol A-iso/terephthalate)copolycarbonates" sowie in der DE-AS 1 495 302, der veröffentlichten europäischen Patentanmeldung 64 153 und dem US-Patent 4 286 083 beschrieben.

Bevorzugte voll-aromatische Polyestercarbonate I besitzen ein als Gewichtsmittel bestimmtes Molekulargewicht $\bar{M}_w$ 10 000 bis 200 000, vorzugsweise von 20 000 bis 80 000, ermittelt durch Lichtstreuung.

Polyphosphate II im Sinne der Erfindung sind Verbindungen der Art, wie sie beispielsweise in der DE-OS 2 944 093 beschrieben sind, also gegebenenalls verzweigte aromatische Homo- oder Copolyphosphonate mit mittleren Molekulargewichten (Zahlenmittel $\bar{M}_w$) von 11 000 bis 200 000, die aus wiederkehrenden Einheiten der Strukturen

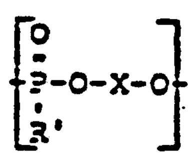 (3)

und gegebenfalls

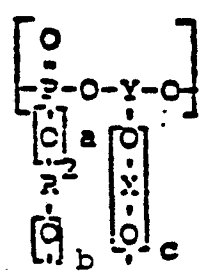 (4)

sowie

den in den Strukturen 3) und 4) an Phosphor gebundenen Endgliedern

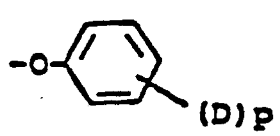 ;-OH; -O-X-OH und an den Sauerstoff gebundenen Endgliedern

-H, 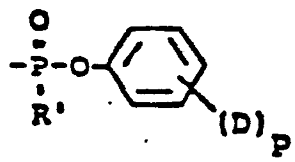 und 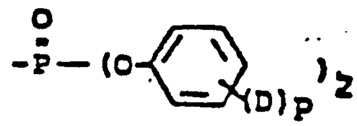

bestehen.

Die Symbole X, D, P und R' sind nachstehend erläutert, wobei der Anteil 4), bezogen auf Summe aus 3) und 4), 0 bis 3 Mol-% betragen kann und wobei in den Strukturen 3) und 4) bedeuten:

R' mindestens einen der Reste:

$C_1$-$C_{12}$-Alkyl, $C_2$-$C_{12}$-Alkenyl, $C_6$-$C_{30}$-Cycloalkyl, -Cycloalkenyl, -Aryl, $C_7$-$C_{30}$-Arylalkyl oder -Arylalkenyl, wobei die jeweilige Arylgruppe nicht substituiert oder durch 1 bis 5 $C_1$-$C_4$-Alkylgruppen substituiert ist;

X mindestens einen der Reste:

Phenylen 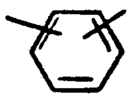

Biphenylen 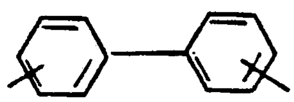

$C_1$-$C_4$-Alkylenbisphenylen 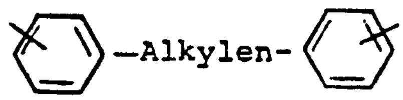

$C_5$-$C_{12}$-Cycloalkylenbisphenylen 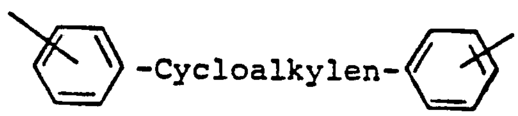

Thiobisphenylen 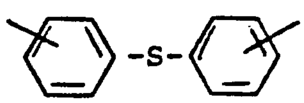

Oxybisphenylen 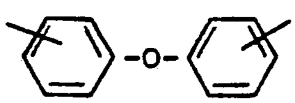

Sulfonylbisphenylen 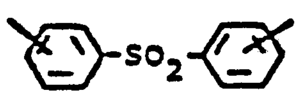

Carbonylbisphenylen 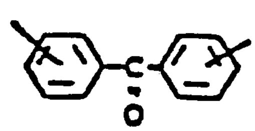

Naphthylen 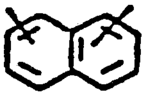

wobei jeder Phenylkern unsubstituiert oder durch 1 bis 4 $C_1$-$C_4$-Alkylgruppen und der Napthylenkern unsubstituiert oder durch 1 bis 6 mindestens einer der genannten Alkylgruppen substituiert ist;

Y = einen drei- oder vierwertigen Rest eines um die phenolischen Hydroxylgruppen verminderten trifunktionellen Einkern- oder tri- oder tetrafunktionellen Mehrkernphenols, wobei im Falle des Mehrkernphenols die ein oder zwei phenolische Hydroxygruppen tragenden aromatischen Kerne durch aliphatische $C_1$-$C_7$-Kohlenwasserstoffreste oder durch mindestens einen Benzolrest verbunden sind;

Y = X, wenn c = 0, a = 1, b = 1 und gleichzeitig $R^2$ = Y' und c' und 1 oder 2 sind,

a = 0 oder die Zahl 1,

b = 0 oder die Zahl 1,

c = 0 oder eine der Zahlen 1 oder 2, vorzugsweise

c = 1 oder 2,

$R^2$ = R', wenn a und b jeweils 0 sind, in diesem Fall muß Y einen drei- oder vierwertigen Rest, wie oben definiert, darstellen,

$R^2$ = 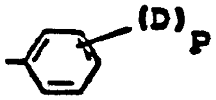 , wenn a = 1 oder b = 0 sind,in

diesem Fall muß Y einen drei- oder vierwertigen Rest, wie oben definiert, darstellen,

$R^2$ = X oder Y' ——$(O-X-O)_c$ , wenn a und b jeweils 1 sind,

D = gleich oder verschieden und eine $C_1$-$C_4$-Alkylgruppe und p = 0 oder eine Zahl von 1 bis 5, vorzugsweise p = 0, darstellt.

Vorzugsweise haben vorstehende Definitionen folgende Bedeutung:

R' = mindestens einen der Reste Methyl oder Phenyl, insbesondere Methyl,

X = mindestens einen der Reste Phenylen, Biphenylen, $C_1$-$C_4$-Alkylenbisphenylen, wobei jeder Phenylkern durch 1 bis 4 Methylgruppen substituiert sein kann, Cyclohexylenbisphenylen, Oxybisphenylen, Thiobisphenylen, Sulfonylbisphenylen, insbesondere $C_1$-$C_4$-Alkylenbisphenylen, wobei jeder Phenylkern durch ein oder zwei Methylgruppen substituiert sein kann,

Y = einen drei- oder vierwertigen Rest eines um die phenolischen Hydroxylgruppen verminderten trifunktionellen Einkern- oder tri- oder tetrafunktionellen Mehrkernphenols, wobei im Falle des Mehrkernphenols die ein oder zwei phenolische Hydroxylgruppen tragenden aromatischen Kerne durch aliphatische $C_1$-$C_7$-Kohlenwasserstoffreste oder durch mindestens einen Benzolrest verbunden sein können,

a = 0 oder die Zahl 1,

b = 0 oder die Zahl 1,

c = eine der Zahlen 1 oder 2,

$R^2$ = R', wenn a und b jeweils 0 sind,

$R^2$ = 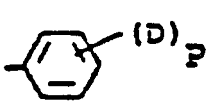 , wenn a = 1 und b = 0 sind,

$R^2$ = X oder Y' ——$(O-X-O)_c$, wenn a und b jeweils 1 sind,

D = gleich oder verschieden und eine $C_1$-$C_4$-Alkylgruppe und p = 0 oder eine Zahl von 1 bis 5, insbesondere p = 0.

Vorzugsweise besitzen die Polyphosphonate II mittlere Molekulargewichte (Zahlenmittel $\bar{M}_w$) von 13 000 bis 80 000, insbesondere 13 000 bis 40 000. Die Bestimmung der Molekulargewichte erfolgt nach der Methode der Membranosmose mit Hilfe von Membranen, die für Teilchen mit einem Molekulargewicht bis zu 3000 durchlässig sind.

Die Polyepoxide III entsprechen den Formeln

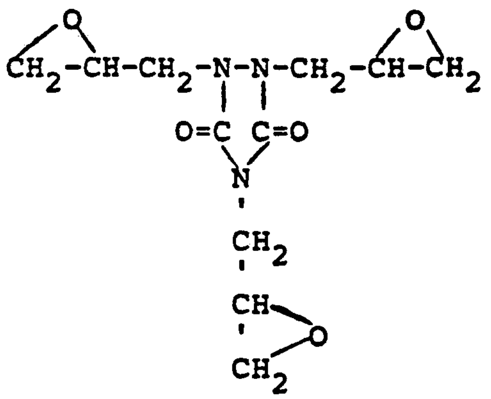

(5)

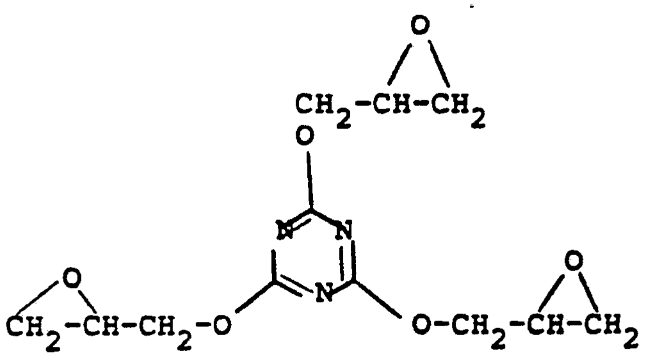

(6)

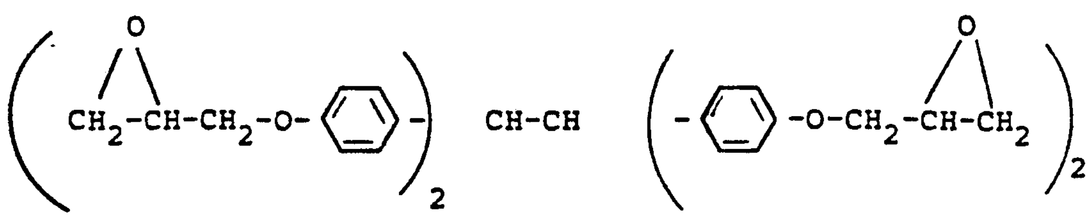

(7)

Die erfindungsgemäßen Mischungen eignen sich besonders zur Herstellung von halogenfreihochbrandwidrigen schlagzähen und wärmeformbeständigen Bauteilen für die Elektronik und Elektrik, wie beispielsweise von Relais, gedruckten Schaltungen, Steckkontakten, Lampenhalterungen sowie zur Herstellung von Bauteilen in Verkehrsmitteln, wie Flugzeugen, Schiffen, Bussen.

**Beispiele 1 - 4**

Ein Granulatgemisch aus 50 Gewichtsteilen Bisphenol-A-Polycarbonat mit einer relativen Viskosität von 1,285 und 50 Gewichtsteilen Poly-(4,4'-dihydroxydiphenyl)-methylphosphonat mit einer relativen Viskosität von 1,283 wurde bei 270°C auf einem Kneter unter Zugabe der unten aufgeführten Epoxide gemischt. Die Epoxidmengen sind untereinander äquimolar.

Während der Vermischung wurden in Abständen von 10 Minuten Proben entnommen und deren relative Viskosität in Dichlormethan (Konzentration 0.5 Gew.-%) bestimmt. Dabei wurde festgestellt, daß beim Lösen von Proben mit einer relativen Viskosität von über 1,290 geringe Mengen unlöslicher Anteile auftraten. Es wurden die Kerbschlagzähigkeit $a_K$ gemäß DIN 53 453 = ASTM D 256 sowie die Reißfestigkeit gemäß DIN 53 455 (1968) = ASTM D 638 gemessen.

**Tabelle 1**

| Beisp. | Epoxid Art | Menge (gew.-%) | Viskosität $\eta_{rel}$ nach 10 Min. | nach 20 Min. | nach 30 Min. | nach 40 Min. | $a_K$(kJ/m²)*) | Reißfestigkeit*) (MPa) |
|---|---|---|---|---|---|---|---|---|
| 1 | (5) | 0.245 | 1,274 | 1,272 | 1,274 | 1,273 | 20 | 55 |
| 2 | (6) | 0.27 | 1,275 | 1,275 | 1,273 | 1,274 | 19 | 54 |
| 3 | (7) | 0.423 | 1,270 | 1,272 | 1,272 | 1,272 | 21 | 56 |
| 4 | x) | 0.379 | 1,26 | 1,302 | 1,270xx) | 1,267xx) | 14 | 42 |

x) Hexahydrophthalsäure-bisglycidylester
xx) nicht ganz gelöst
*) nach 10 Min. Mischzeit bestimmt

**Beispiel 5**

50 Gewichtsteile Poly-(4,4'-dioxydiphenyl)-methylphosphonat ($\eta_{rel}$ = 1,283), 0,5 Gewichtsteile Trisglycidylisocyanurat und 50,0 Gewichtsteile eines aromatischen Polyestercarbonats auf Basis Bisphenol A mit 50 Mol-% Carbonat- und je 25 Mol-% Terephthalat- und Isophthalatstrukturen ($\eta_{rel}$ = 1,301; statischer Polymeraufbau) wurden bei 280°C in einem Kneter gemischt. Während des Mischens wurden in Zeitabständen von 10 Minuten Proben entnommen und deren relative Viskositäten wie in den Beispielen 1 bis 4 bestimmt. Ebenfalls wurden die Kerbschlagzähigkeiten sowie die Reißfestigkeiten nach 10 Minuten Mischzeit bestimmt.

**Beispiel 6**

30 Gewichtsteile Poly-(4,4'-dioxydiphenyl)-methylphosphonat ($\eta_{rel}$ = 1,283), 0,3 Gewichtsteile Trisglycidylisocyanurat und 70 Gewichtsteile eines aromatischen Polyesters auf Basis Bisphenol A und Iso-/Terephthalsäure im Verhältnis 1 : 1 ($\eta_{rel}$ = 1,306) wurden 285°C in einem Kneter miteinander gemischt. Während des Mischens wurden in Zeitabständen von 10 Minuten Proben entnommen und deren relative Viskositäten bestimmt. Die Kerbschlagzähigkeit sowie die Reißfestigkeit wurden ebenfalls nach 10 Minuten Mischzeit bestimmt.

**Vergleichsbeispiel 1**

Beispiel 1 wurde wiederholt ohne Zumischung eines der in der Tabelle 1 genannten epoxidischen Additive.

**Vergleichsbeispiel 2**

Beispiel 5 wurde wiederholt ohne Zumischung von Trisglycidylisocyanurat.

**Vergleichsbeispiel 3**

Beispiel 6 wurde wiederholt ohne Zumischung von Trisglycidylisocyanurat.

**Tabelle 2**

| Beispiele | Viskositäten $\eta_{rel}$ | | | | | |
|---|---|---|---|---|---|---|
| | nach 10 Min. | nach 20 Min. | nach 30 Min. | nach 40 Min. | $a_K$(kJ/$m^2$) | Reißfestigkeit (MPa) |
| 5 | 1,292 | 1,289 | 1,287 | 1,288 | 22 | 54 |
| 6 | 1,291 | 1,288 | 1,286 | 1,285 | 20 | 56 |
| Vergleichsbeispiel 1 | 1,224 | 1,217 | 1,211 | 1,116 | 7 | 22 |
| Vergleichsbeispiel 2 | 1,196 | 1,192 | 1,183 | 1,171 | 6 | 19 |
| Vergleichsbeispiel 3 | 1,219 | 1,193 | 1,190 | 1,181 | 6 | 20 |

**Patentansprüche**

1. Mischungen aus:
I. 5 bis 95 Gew.-% halogenfreiem aromatischem Polycarbonat und/oder halogenfreiem voll-aromatischem Polyester und/oder halogenfreiem voll-aromatischem Polyestercarbonat,
II. 5 bis 95 Gew.-% halogenfreiem aromatischem Polyphosphonat und
III. 0.1 bis 1.0 Gew.-% Polyepoxid aus der Reihe Triglycidylurazol, Trisglycidylisocyanurat und und 1.1.2.2-Tetra-(p-glycidyl-oxyphenyl)-ethan,
wobei sich die Gewichtsprozente jeweils auf die Summe der Komponenten I und II beziehen.
2. Mischungen nach Anspruch 1, dadurch gekennzeichnet, daß sie:
10 bis 90 Gew.-% Komponente I,
10 bis 90 Gew.-% Komponente II und
0.1 bis 1.0 Gew.-% Komponente III enthalten.
3. Mischungen nach Ansprüchen 1 und 2, dadurch gekennzeichnet, daß sie 0.15 bis 0.75 Gew.-% Komponente III enthalten.
4. Verfahren zur Herstellung der Mischungen nach Ansprüchen 1 - 3, wonach man die Komponenten I, II und III in einem Kneter oder Extruder homogenisiert.
5. Verwendung der Mischungen nach Ansprüchen 1 - 3 zur Herstellung von Formkörpern, Fasern und Folien.

**Claims**

1. Mixtures of:
I. 5 to 95 % by weight of halogen-free aromatic polycarbonate and/or halogen-free fully aromatic polyester and/or halogen-free fully aromatic polyester carbonate,
II. from 5 to 95 % by weight of halogen-free aromatic polyphosphonate and
III. from 0.1 to 1.0 % by weight of polyepoxide selected from triglycidylurazole, tris-glycidyl-isocyanurate and 1,1,2,2-tetra-(p-glycidyl-oxyphenyl)-ethane,
the percentages by weight referring in each case to the sum of components I and II.
2. Mixtures according to claim 1, characterised in that they contain from 10 to 90 % by weight of component I, from 10 to 90 % by weight of component II and from 0.1 to 1.0 % by weight of component III.
3. Mixtures according to claims 1 and 2, characterised in that they contain from 0.15 to 0.75 % by weight of cmponent III.
4. Process for the preparation of mixtures according to claims 1 to 3, in which components I, II and III are homogenized in a kneader or extruder.
5. Use of the mixtures according to claims 1 to 3 for the production of moulded bodies, fibres and films.

**Claims**

1. Mélanges constitués :

I. de 5 à 95 % en poids de polycarbonate aromatique dépourvu d'halogènes et/ou de polyester entièrement aromatique dépourvu d'halogénes et/ou de polyestercarbonate entièrement aromatique dépourvu d'halogènes,

II. de 5 à 95 % en poids de polyphosphonate aromatique dépourvu d'halogènes et

III. de 0,1 à 7,0 % en poids de polyépoxyde de la série triglycidylurazole, trisglycidylisocyanurate et 1.1.2.1-tétra-(p-glycidyl-oxyphényl)-éthane, les pourcentages en poids se rapportant dans chaque cas à la somme des composants I et II.

2. Mélanges suivanr la revendication 1, caractérisés en ce qu'ils contiennent:

10 à 90 % en poids de composant I, 10 à 90 % en poids de composant II et 0,1 à 1,0 % en poids de composant III.

3. Mélanges suivant les revendications 1 et 2, caractérisés en ce qu'ils contiennent 0,15 à 0,75 % en poids de composant III.

4. Procédé de production de mélanges suivant les revendications 1 à 3, dans lequel on homogénéise les composants I, II et III dans un malaxeur ou une extrudeuse.

5. Utilisation des mélanges suivant les revendications 1 à 3, pour la production de pièces moulées, de fibres et de feuilles.